# EUROPEAN PATENT APPLICATION

(11) **EP 1 791 392 A1**
(43) Date of publication of application: **30.05.2007**
(21) Application number: 05781589.6
(22) Date of filing: 05.09.2005
(51) Int. Cl.: H04R 25/00

(54) **SPECTACLE TYPE COMMUNICATION DEVICE**

(30) Priority: 07.09.2004 JP 2004259485
(71) Applicant: Temco Japan Co., Ltd., Tokyo 168-0062 (JP)
(72) Inventor: WAKABAYASHI, Tetsuo, TEMCO JAPAN CO., LTD., Tokyo 168-0062 (JP); TAKEDA, Takeshi, TEMCO JAPAN CO., LTD., Tokyo 168-0062 (JP)
(74) Representative: Bentz, Jean-Paul
(86) International application number: PCT/JP2005/016240
(87) International publication number: WO 2006/028045

(57) **Abstract**

A spectacle type communication device wearable in the same feeling as in wearing normal spectacles, preventing tired feeling and uncomfortable feeling from providing to a wearer even if the wearer uses it for a long time, and capable of providing excellent aesthetic appearance. In the communication device formed in a spectacle style, bone-conduction speakers (3) separated from a communication device body (7) having an amplifier circuit and a battery are mounted on temples (2) or ear pads (4) and supported to be brought into contact with tragus (10) or near jaw joints slightly forward of the tragus (10), and the connection parts (5) of cables (8) extending from the communication device body (7) are disposed on the temples (2) or the ear pads (4).

## Description

### Technical Field:

The present invention relates to a spectacle type communication device, and more specifically to a spectacle type communication device adapted for being used as a hearing aid or a hand free communication device.

### Background Art:

In recent years, with the widespread of the cell phone, demand for a hand free communication unit increases , the unit allowing a user to communicate with his partner at a time when the user drives a car or works using both his hands, for example. Further, as the hearing aid is developed, the user of the hearing aid demands a higher quality in the hearing aid. Particularly, a product excellent in performance is required, provided that the product is not an attention-seeking one as a hearing aid.

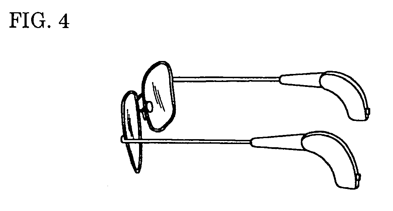

Heretofore, a spectacle type communication device provided with a hand set function or a communication receiving function has been proposed as a hand free communication means or as one of modes of the hearing aid. Of these proposed products, a commercially available product is a hearing aid provided with a speaker/microphone in an ear pad of a spectacle and a drive circuits and a battery all required thereto (see Fig. 4)

Patent document 1: Japanese Utility Model Registration No.: 3073073 gazette; and

Patent document 2: Japanese Utility Model Registration No.: 3077384 gazette.

### DISCLOSURE OF THE INVENTION

### PROBLEMS TO BE SOLVED BY THE INVENTION

As described above, the conventional spectacle communication device provided with only the hand set function or the communication receiving function is too large in its ear pad in volume and in weight since the ear pad must contain therein various circuits, a battery and like components. Due to this, there is a problem in that: since the ear pad is brought into relatively large press-contact with a user's ear in order to support the ear pad, the user suffers from fatigue and ill feeling when he wears the conventional device for a long period of time. Furthermore, the large-sized ear pad gives an ill feeling appearance, that is, gives an attention-seeking appearance, which makes the user tired in wearing the device. This is a big problem for the user of the conventional device.

The present invention was made to solve the above problems. Consequently, it is an object of the present invention to provide a spectacle type communication device capable of allowing the user to wear the device comfortably as is in the case of an ordinary spectacle, without suffering from any fatigue and ill feeling even when he wears the device for a long period of time. The device of the present invention is alsoimproved in design.

### MEANS FOR SOLVING THE PROBLEMS

In order to solve the above problems, in the present invention described in a claim 1, there is provided a spectacle type communication device characterized in that: in the communication device assuming a spectacle style, a bone conduction speaker separated from a main body of the communication device, which device comprises both an amplifier circuit and a battery, is supported in a manner such that the bone conduction speaker is mounted on a temple or an ear pad so as to be capable of being brought into contact with a tragus or a near area adjacent to a jaw joint slightly forward of the tragus; and, a connection part of a cable extending from the main body of the communication device is disposed on the temple or on the ear pad.

Preferably: a portion of the temple or of the ear pad is provided with the bone conduction speaker; the portion is gradually bent downward so as to be directed to the tragus or a forward area of the tragus; at least a portion of the temple is provided with the bone conduction speaker; and, the portion is constructed of a resilient member.

Further preferably: the said bone conduction speaker is mounted on an end portion of a resilient arm extending from the temple; and, the bone conduction speaker is mounted on an extension of an end portion of the ear pad, which extension surrounds an ear lobe.

Still further preferably: a microphone is incorporated in the temple; microphone is constructed of a bone conduction microphone; the connection part of the cable extending from the main body of the communication device is provided in a front end portion of the ear pad on each of the left and the right side of a user's head; and, the cable connected with the connection part also functions to hang the main body of the communication device from a user's neck.

### EFFECT OF THE INVENTION

In the present invention, since only both the microphone and the bone conduction speaker, which are separated from the main body of the communication device comprising the amplifier circuit and the battery, are mounted on a portion of the spectacle, the spectacle type communication device is light in weight as a whole and is excellent in balance when worn by the user, so that the user is free from any fatigue and ill feeling even when he wears the device for a long period of time. In addition, since the device is excellent in freedom of its shape, the spectacle type communication device of the present invention is also excellent in its design.

Further, since the ear opening of the user is not closed by the device when the device is worn by the user, there is no fear that the device damages the user's every day life, even when he wears the device always. When the user drives a car, it is possible that the user wears the device safely. Further, when the air conduction microphone is replaced with the bone conduction microphone which is brought into contact with an area in the vicinity of the user's temple, it is possible for the device to be improved in its sound tone caught by its microphone, without damaging the device in wearability and in appearance. These are the effects of the present invention.

When the connection portion of the cable extending from the main body of the communication device is disposed in the front end of the ear pad on each of the left and the right side of the user's head, it is possible for the cable to be suspended from the user's neck.

### BEST MODE FOR CARRYING OUT THE INVENTION

Preferred embodiments for carrying out the present invention will be described with reference to the accompanying drawings. One shown in the drawings is a spectacle type communication device of the present invention having the function of a handset to assume a spectacle style, and is constructed of: a temple 2 mounted on the microphone 1; an ear pad 4 on which a bone conduction speaker 3 is mounted; an input/output terminal 5 formed in a front end of the ear pad 4; and, the remaining members (i.e., a front frame, lenses and the like).

The bone conduction speaker 3 is one capable of transmitting a voice sound as a bone conduction sound, and is supported in a manner such that: when the user wears the device of the present invention, the bone conduction speaker 3 is brought into contact with an area in the vicinity of the ear, preferably a tragus 10 or a near area adjacent to a jaw joint slightly forward of the tragus 10. Under such circumstances, the sound issued from the bone conduction speaker 3 is capable of being transmitted as a bone conduction sound to a hearing organ so that the sound is clearly caught without disturbed by any environmental noise.

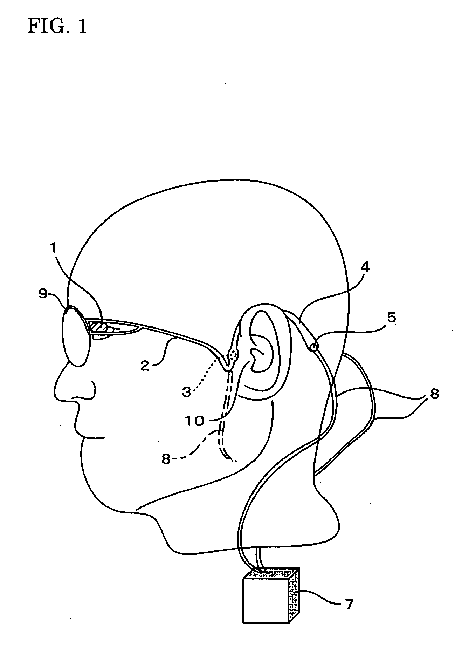

In order to have the bone conduction speaker 3 brought into contact with the tragus 10 or to the near area adjacent to the jaw joint, an embodiment shown in Fig. 1 is employed. In this embodiment, a front portion of the ear pad 4 in which the bone conduction speaker 3 is incorporated is gradually bent downward. Also the temple 2 is gradually bent downward so as to be directed to a front end portion of the ear pad 4. In this case, the ear pad 4 has its a housing portion for receiving the bone conduction speaker therein constructed of a resilient member made of silicone, rubber and the like. Also it is possible to mount a resilient member on the housing portion of the ear pad 4.

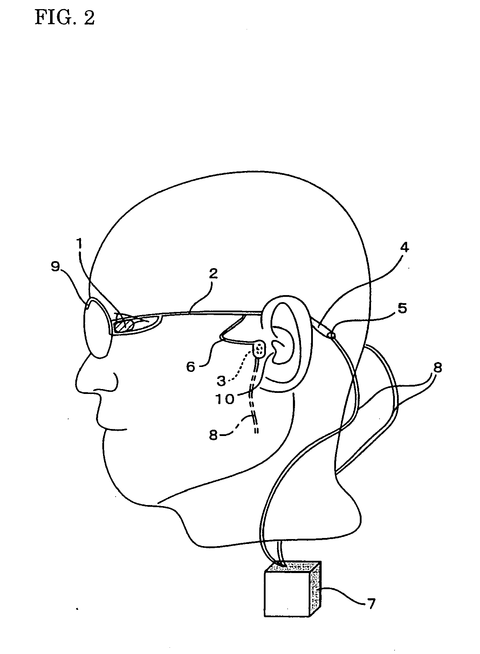

In another embodiment shown in Fig. 2, the temple 2 is provided with an extension forming a resilient arm 6. On a front end of the resilient arm 6, the bone conduction speaker 3 is mounted. The resilient arm 6 is gradually bent in a manner such that the bone conduction speaker 3 is brought into contact with the tragus 10 or to the near area adjacent to the jaw joint.

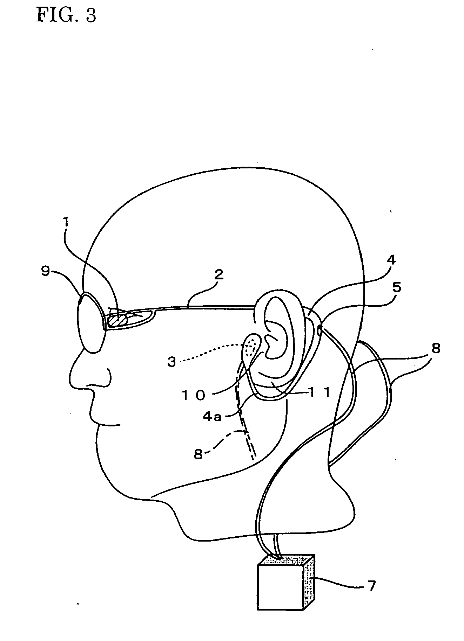

In an embodiment shown in Fig. 3, a front end of the ear pad 4 is extended to form an extension 4a in a manner such that the extension 4a surrounds the ear lobe 11, and is directed to the tragus 10 or to the near area adjacent to the jaw joint. The bone conduction speaker 3 is mounted on a front end of the extension 4a.

The microphone 1 may be of an air conduction type or may be constructed of a bone conduction microphone. Any one shown in the drawings is constructed of an air conduction microphone. In the case where a bone conduction microphone is used, in comparison with the air conduction microphone, the bone conduction microphone is provided in the closer vicinity to the ear, that is, to the ear lobe near the bone conduction speaker 3 or to the jaw joint. When the bone conduction microphone is used, the user' s voice sound is picked up as a bone conduction sound through the bone conduction microphone, converted into an electric signal and transmitted. In this case too, any environmental noise is not picked up. Only the user's voice sound is transmitted. Due to this, it is possible for a partner in communication to catch the user's voice sound clearly.

When the microphone 1 is provided in front of the hinge, it is possible to fold the temple 2 relative to the front frame.

Incidentally, in order to suppress a howling noise, preferably the microphone 1 and/or the bone conduction speaker 3 are/is mounted through a suitable resilient member.

In the spectacle type communication device of the present invention, the spectacle's temple 2 and/or the ear pad 4 are/is provided with only both the microphone 1 and the bone conduction speaker 3. The remaining members needed to operate the microphone 1 and the bone conduction speaker 3 are constructed of an amplifier circuit, a battery, a circuit for a hearing organ, a circuit for communication instruments and like circuits, and are contained in a main body 7 of the spectacle type communication device, wherein the main body 7 of the communication device is separated from the device. Both the microphone 1 and the bone conduction speaker 3 are connected with the main body 7 through a cable 8. The cable 8 is connected with the input/output terminal 5 disposed in the ear pad 4. The cable 8 is intended for transmission of a signal used in communication and also intended for a power source.

As for a lead (i.e., a wire) extending from the microphone 1 and the bone conduction speaker 3, the lead passes through the temple 2 and the interior of the ear pad 4, and is connected with the input/output terminal 5.

In the case where the input/output terminal 5 is provided in a front end of the ear pad 4 on each of the left and the right side of the user's head, it is easy for the cable 8 to turn the backside of the user's head. When the cable 8 is formed into a loop shape, it is possible for the cable 8 to function to hang the spectacle from the user's neck. It is natural that the input/output terminal 5 may be disposed in front of the ear in a manner such that the cable 8 is suspended downward from the ear (see the phantom lines shown in the drawings). Incidentally, when the user carries the main body 7 of the communication device, the main body 7 may be received in the user's breast pocket. Alternatively, it is also possible to suspend the main body 7 from the user's neck when the user carries the main body 7.

While the present invention has been described in detail to some extent with reference to the preferred embodiments thereof, it will be understood by those skilled in the art that various changes in form and details may be made therein without departing from the spirit and scope of the present invention as defined by the appended claims. In other words, the present invention is not limited in scope by its specified embodiments.

### BRIEF DESCRIPTION OF THE DRAWINGS

[Fig. 1] is a view illustrating an embodiment of the spectacle type communication device of the present invention.
[Fig. 2] is a view illustrating another embodiment of the spectacle type communication device of the present invention.
[Fig. 3] is a view illustrating further another embodiment of the spectacle type communication device of the present invention.
[Fig. 4] is a view illustrating an example in shape of the conventional spectacle type communication device.

## Claims

1. A spectacle type communication device **characterized in that**: in said communication device assuming a spectacle style, a bone conduction speaker separated from a main body of said communication device, which device comprises both an amplifier circuit and a battery, is supported in a manner such that said bone conduction speaker is mounted on a temple or an ear pad so as to be capable of being brought into contact with a tragus or a near area adjacent to a jaw joint slightly forward of said tragus; and, a connection part of a cable extending from said main body of said communication device is disposed on said temple or said ear pad.

2. The spectacle type communication device as set forth in claim 1, wherein: a portion of said temple or of said ear pad is provided with said bone conduction speaker; said portion is gradually bent downward so as to be directed to said tragus or a forward area of said tragus.

3. The spectacle type communication device as set forth in claim 1, wherein: at least a portion of said temple is provided with said bone conduction speaker; and, said portion is constructed of a resilient member.

4. The spectacle type communication device as set forth in claim 1, wherein said bone conduction speaker is mounted on an end portion of a resilient arm extending from said temple.

5. The spectacle type communication device as set forth in claim 1, wherein said bone conduction speaker is mounted on an extension of an end portion of said ear pad, which extension surrounds an ear lobe.

6. The spectacle type communication device as set forth in claim 1, wherein a microphone is incorporated in said temple.

7. The spectacle type communication device as set forth in claim 6, wherein said microphone is constructed of a bone conduction microphone.

8. The spectacle type communication device as set forth in claim 1, wherein: said connection part of said cable extending from said main body of said communication device is provided in a front end portion of said ear pad on each of the left and the right side of a user's head; and, said cable connected with said connection part also functions to hang said main body of said communication device from a user's neck.
